(19) **Europäisches Patentamt**

**European Patent Office**

**Office européen des brevets**

(11) **EP 1 083 423 A2**

(12) **EUROPEAN PATENT APPLICATION**

(43) Date of publication:
**14.03.2001 Bulletin 2001/11**

(51) Int. Cl.7: **G01N 15/02**

(21) Application number: **00118258.3**

(22) Date of filing: **04.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.09.1999 IT MI991906**

(71) Applicants:
• **Prodi, Franco**
  **40128 Bologna (IT)**
• **Pasqualucci, Fausto**
  **00189 Roma (IT)**
• **Tagliavini, Antonio**
  **40124 Bologna (IT)**

(72) Inventors:
• **Prodi, Franco**
  **40128 Bologna (IT)**
• **Pasqualucci, Fausto**
  **00189 Roma (IT)**
• **Tagliavini, Antonio**
  **40124 Bologna (IT)**

(74) Representative:
**Modiano, Guido, Dr.-Ing. et al**
**Modiano & Associati SpA**
**Via Meravigli, 16**
**20123 Milano (IT)**

(54) **Pluviometric disdrometric apparatus with high sensitivity and response speed**

(57)    A pluviometric disdrometric apparatus with high sensitivity and response speed, comprising a pair of antennas (1) connected to continuous wave generator means and to receiver means (3), amplifier means (4) being connected to the receiver means and to data processing means (6), the antennas being arranged side by side and being aimed upwards and optionally tilted toward each other, the intersection of directivity lobes of the antennas forming a measurement volume in which a given atmospheric precipitation is examined.

**EP 1 083 423 A2**

## Description

The present invention relates to a pluviometric disdrometric apparatus with high detection sensitivity and response speed.

More particularly, the invention relates to an apparatus which combines the characteristics of a device for detecting the presence of precipitation, of a device for identifying the type of precipitation (rain, snow, hail), of a device for measuring the size distribution of the hydrometeors (drops, snowflakes, hailstones respectively) that compose the precipitation (disdrometer), and of a device for measuring the intensity of the precipitation (rain gauge) which has high sensitivity and response speed.

It is known that in order to measure the main characteristics of a precipitation, the intensity and size distribution of the elements that constitute it, known as hydrometeors (for example raindrops), instruments known respectively as rain gauges and disdrometers (a contraction of "distribution of rain drop meter") are used, based on various kinds of conventional techniques.

Measurement of the intensity of precipitation (pluviometric measurement) is well-known and is useful in many fields, such as agriculture, hydrology, land protection, etcetera. The technique more used is based on the rain gauge with a funnel and an oscillating tray, in which the frequency of the oscillations of the tray indicates the intensity of the rainfall. Although simple, this apparatus has various limitations: first of all, it does not operate satisfactorily for low values of precipitation intensity: moreover, the funnel is easily blocked by various kinds of object; and, most importantly, the apparatus yields no response for snow-like precipitation and for hail. Furthermore, it clearly has no disdrometric capability.

Knowledge of the size distribution of the drops (disdrometric measurement) allows to characterize the type of precipitation and to predict its evolution within certain limits.

Disdrometers of various kinds have been proposed which provide for processing, with electronic means, signals arriving from transducers of an optical or electromechanical type, the latter being based on the detection of the impact of the incoming drops on a suitable disk which is connected to a transducer.

The optical disdrometers that have been proposed up to now are relatively delicate and expensive instruments whose use in unattended stations can cause problems.

Electromechanical impact disdrometers instead have difficulty in discriminating between simultaneous or almost simultaneous drops and have low sensitivity to small-diameter drops.

Other systems currently in use employ microwave radar.

The use of conventional-type radar for detecting hydrometeors in the atmosphere is widespread. These radars are suitable to observe large volumes, over which average properties (for example the water content of a cloud) are measured. However, due to their pulsed mode of operation, they have a minimum operating range on the order of a few hundred meters. Furthermore, since they are unable to determine the fall velocity of the targets (hydrometers) at ground level or their size distribution, it is not possible to obtain a pluviometric or disdrometric measurement from this type of radar.

Another solution uses continuous-wave low-power Doppler-type radars, suitable to be used for detecting moving obstacles, to obtain a true pluviometric and disdrometric indication.

In these radars, a beam of microwaves of suitable frequency emitted by a transmitter antenna fed by a continuous-wave generator and oriented in an upward direction is back-scattered by the free-falling hydrometeors. The return signal is acquired by the receiving antenna and analyzed by the receiver section of the radar.

A same antenna can be used both for the transmission function and for the reception function. In this case, reference is made to monostatic radar. When the antennas are instead separate, reference is made to bistatic radar.

The received signal (echo) is frequency-shifted with respect to the transmitted signal by an amount which depends on the fall velocity of the hydrometeors (Doppler effect). The amplitude of the echo depends on the reflectivity of the drops (expressed by their backscattering coefficient), on their number and on their position inside the portion of space observed by the instrument (measurement volume).

However, there are several problems which up to now have prevented Doppler radars from providing sufficiently reliable and accurate disdrometric and pluviometric indications, as described hereinafter with the means to which the present invention relates.

Considering raindrops in free fall in the atmosphere, in the absence of wind, close to the ground each drop has reached a condition of aerodynamic equilibrium and descends vertically at a constant velocity (terminal velocity) which depends exclusively on the size of the drop. Accurate empirical formulas which link the terminal velocity to the equivalent diameter have long been known for raindrops (similar formulas, even if less accurate due to objective reasons, exist for hailstones and snowflakes). Moreover, appropriate methods of calculation have determined accurately the backscattering coefficients, again as a function of the equivalent diameter of the drop. The term "equivalent diameter" of a drop designates the diameter of a sphere having the same volume. Hereinafter, the term "diameter" referred to a drop is understood as equivalent diameter.

For the sake of simplicity, reference is made hereinafter to rain-like precipitation. The description applies in a fully similar manner to other kinds of precipitation (snow, hail).

The operating principle of a Doppler-effect rain gauge-disdrometer is as follows. The radar is aimed upwards and observes the falling drops. Each drop produces an echo which is characterized by a Doppler shift which depends on its terminal velocity, which is a function of its diameter. The amplitude of said echo is proportional to the back-scattering coefficient, which is also a function of the diameter.

If the signal in output from said radar as it observes real precipitation is subjected to spectral analysis, one finds a continuous spectrum ranging from zero to a certain maximum frequency. This occurs as a consequence of the fact that the drops contained in real precipitation have a continuous size distribution up to a certain maximum diameter, beyond which the individual drop is no longer stable but tends to break up into smaller drops.

If a diameter corresponds to each frequency, the frequency spectrum represents the diameter distribution of the drops. One may therefore consider dividing each frequency component by the backscattering coefficient related to the corresponding diameter and thus determine the number of drops having that diameter that were present in the observed precipitation.

Actually, this is a highly simplistic hypothesis for the following reasons:

1 - For a drop falling at constant velocity, the Doppler shift is not constant but varies according to the position of the drop with respect to the instrument. The generated Doppler frequency in fact depends on the velocity with which the equiphase surfaces of the instrument are crossed; said surfaces are ellipsoids whose foci lie in the phase centers of the antennas. Only at a sufficiently large distance from the instrument this frequency can be considered constant and merely a function of the fall velocity and therefore of the diameter. In the regions closest to the radar antennas, where the amplitude of the echo is greater, said frequency undergoes significant down-shifts. Accordingly, there is no one-to-one correspondence between Doppler shift and drop diameter, since drops having different terminal velocities in different points of the measurement volume can cause the same instantaneous Doppler shift.

2 - The amplitude of the echo is indeed proportional to the backscattering coefficient related to the diameter of the drop, but is highly dependent on the position of the drop inside the measurement volume, due to various factors (directivity of the antennas, path attenuation, variation in backscattering angle).

3 - Even supposing that the difficulties described in items 1 and 2 are overcome and that determination of the disdrometric distribution of the drops can be achieved, in order to be meaningful it would have to be referred to a certain volume (measurement volume) in the same way in which in a conventional rain gauge the measured amount of water is meaningful only if it is referred to a certain catch area. Said measurement volume, which is defined as the region of space in which the falling drops are seen by the instrument, cannot be defined easily in advance, since its contours depend on the noise of the receiver and on the power of the transmitter and plausibly vary according to the diameter of the drop.

4 - Moreover, if one observes the plurality of drops present within the measurement volume of the instrument, considering the resulting echo as a linear composition of the echoes of the individual drops, there are other phenomena that can invalidate the overlap of the effects, for example:

-- interference: destructive interference can occur among the echoes, particularly echoes of drops having the same diameter;
-- masking: nearer drops can hide more distant drops.

These considerations indicate the difficulty of obtaining from the signal in output from the instrument information on the observed precipitation which is more than qualitative.

These difficulties can be overcome as described hereinafter, by applying statistical criteria instead of deterministic ones.

The aim of the present invention is to provide a pluviometric disdrometric apparatus which is capable of providing precise measurements of the main characteristics of a precipitation, as described hereinafter, regardless of the minimum operating distance.

Within the scope of this aim, an object of the present invention is to provide a pluviometric disdrometric apparatus which can detect in real time whether a precipitation is in progress or not.

Another object of the present invention is to provide a pluviometric disdrometric apparatus which is capable of recognizing the type of said precipitation (rain, snow or hail).

Another object of the present invention is to provide a pluviometric disdrometric apparatus which is capable of measuring the size distribution of the hydrometeors that compose the precipitation (disdrometric function).

Another object of the present invention is to provide a pluviometric disdrometric apparatus which is capable of measuring the intensity of the precipitation and the total amount of water fallen during a certain period per unit of surface (pluviometric function).

Another object of the present invention is to provide a pluviometric disdrometric apparatus which can be connected, together with other apparatuses of the same type, to a central computer so as to provide a network of remote sensing units.

Another object of the present invention is to provide a pluviometric disdrometric apparatus which can operate unattended and therefore requires limited and occasional maintenance.

Another object of the present invention is to provide a pluviometric disdrometric apparatus which is highly reliable and is relatively easy to manufacture at costs which are competitive with respect to the conventional apparatuses.

These and other objects which will become better apparent hereinafter are achieved by a pluviometric disdrometric apparatus, comprising a pair of antennas connected to continuous wave generator means and to receiver means, amplifier means being connected to said receiver means and to data processing means, said antennas being arranged side by side and being aimed upwards, the intersection of directivity lobes of said antennas forming a measurement volume in which a given atmospheric precipitation is examined.

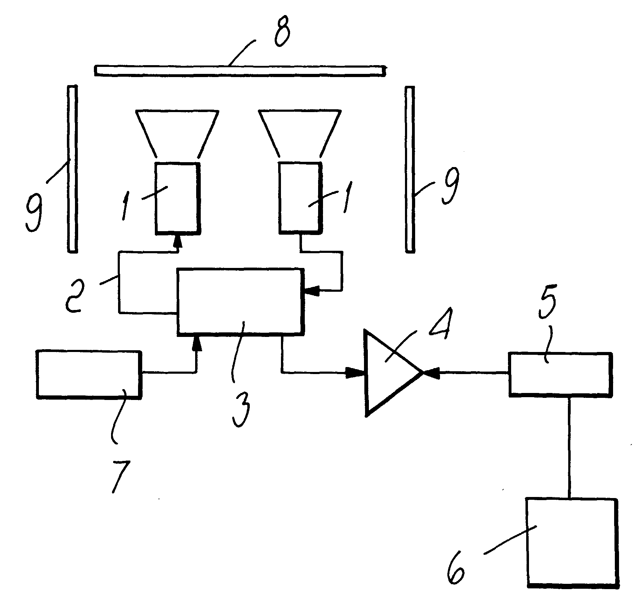

Further characteristics and advantages of the invention will become better apparent from the description of a preferred embodiment of the apparatus according to the invention, illustrated only by way of non-limitative example in the accompanying drawing, wherein the only figure is a block diagram of the apparatus according to the invention.

With reference to the above figure, the apparatus according to the invention comprises a pair of antennas 1, a transmitter antenna and a receiver antenna, which are arranged side by side, are aimed upwards and are optionally tilted toward each other.

The distance, the inclination and the directivity characteristic of the antennas define a region of space in which the signals backscattered by the hydrometeors illuminated by the beam that leaves the transmitter antenna fall within the region of sensitivity of the receiver antenna. This region can be visualized as the region of space illuminated by the transmitter and seen by the receiver, and therefore defined by the intersection of the directivity lobes of the antennas. This region is termed "measurement volume", since this is the region of space in which precipitation is examined. The antennas 1 end with a rectangular waveguide and are connected, by means of semirigid coaxial connections 2, to an integrated module 3 which contains continuous wave generator means, which can optionally be modulated, and a low-noise receiver which comprises a mixer in which the signal arriving from the antenna 1 and the signal of the transmission generator are mixed. A synchronous demodulation of the received signal is thereby obtained. The signal in output from the demodulator means contained in the module 3 is sent to low-frequency amplifier means 4 and then to analog/digital conversion means 5, which constitute the interface between the apparatus and a processing system 6, which can be constituted by a DSP (digital signal processor) or by microprocessor system or by a personal computer.

Adapted power supply means 7 supply power to all the components of the apparatus.

The apparatus is conveniently accommodated in a watertight container, not shown in the figure. The upper part, onto which the apertures of the antennas 1 open, is made of a tough material which causes low attenuation at the operating frequency of the radar, with the refinements in terms of shape and arrangement described in detail hereinafter.

The transmitter section of the radar emits a continuous wave at constant frequency, chosen so as to obtain good reflection on the part of hydrometeors.

The receiver section detects the signal reflected by any obstacles that are present in the above defined measurement volume of the apparatus. The amplitude of the received signal depends on the characteristics of the objects being present in the measurement volume (material, shape, orientation), on their position within the measurement volume and of course on their number.

The frequency of the return signal undergoes, with respect to the emitted signal, a shift which is a function of the velocity of the target with respect to the instrument (commonly known as Doppler shift).

The above described drawbacks of conventional pluviometric and disdrometric apparatus are overcome by considering the interaction with hydrometeors by using statistical criteria and by providing the apparatus with the refinements described hereinafter regarding its constructive particularities, its calibration criteria and its processing and signal analysis methods.

The application of the statistical criteria described hereinafter is allowed by the fact that in the case of atmospheric precipitations the target is constituted by a large number of hydrometeors which, if a sufficiently short period of observation is taken into consideration, can be assumed to be distributed in space and time in a uniformly random manner. In other words, the probability of finding a drop in a certain volume in a certain time interval is the same throughout the observed region of space and throughout the observation period.

Suppose that monodisperse rain of constant average intensity, i.e., a precipitation in which all the drops have the same diameter and therefore the same fall velocity and are distributed randomly in space and time, is made to fall onto the apparatus according to the invention.

If one observes the amplitude of the output signal, averaged over a sufficiently long time, one notices that it is constant over time and is proportional to the intensity of the precipitation.

A frequency analysis of the same signal in output does not generate a line, as one may expect owing to the fact that all the drops have the same fall velocity, but a considerably broad spectrum. This is due to the fact that the Doppler shift depends on the velocity with which the equiphase surfaces are crossed, and said surfaces are not planes but ellipsoids whose foci lie in the phase centers of the antennas.

The phenomenon is affected, in particular, by what occurs in the last part of the trajectory, in which the drops that fall more laterally generate Doppler shifts which decrease significantly with respect to the Doppler frequency that corresponds to the terminal velocity at a distance, in the very situation in which the amplitude of the signal instead increases.

The shape of the spectrum is an asymmetric bell, limited by a side which is steep in an upward direction (the limit frequency, which corresponds to terminal velocity at great distance) and is more gradual in the downward region, to indicate that only a decrease is indeed possible with respect to the limit frequency.

The spreading of what should be a single spectral line depends on the directional characteristics of the antennas, on their orientation and on the shape and placement of the covering, i.e., on the construction criteria of the apparatus.

If the diameter of the drops that compose the monodisperse precipitation is varied, a family of curves is obtained, each of which represents the response of the instrument to that diameter. Actually, the family consists of the same curve, differently frequency-mapped in order to take into account the different terminal velocity of the drops and amplitude-mapped in order to take into account the different backscattering coefficient. This characteristic yields the natural selectivity of the instrument, i.e., the possibility to resolve more or less coarsely the diameters of the drops that constitute the spectrum.

If a polydisperse precipitation, i.e., a precipitation composed of drops which are again randomly distributed in space and time but have different diameters, is now made to fall onto the instrument, the acquired spectrum has a shape and an amplitude which depend on the size distribution and intensity of the precipitation.

Noting that any precipitation can be considered as the overlapping of several monodisperse precipitations, each having its own intensity, if the principle of overlapping effects applies, the resulting spectrum can be considered as the result of the sum of several elementary spectra, one for each diameter that composes the polydisperse precipitation and each multiplied by its own coefficient. These coefficients represent the size distribution of the drops.

Actually, if the size distribution of the drops is continuous, as occurs for natural precipitation, one should determine a weighting function rather than discrete coefficients. It is therefore convenient to perform a division into a finite number of diameter intervals to be matched by a corresponding number of frequency intervals, as indicated hereinafter.

At this point the core problem of the entire discussion arises: spectrum inversion. In other words, one must be able to go back from the spectrum to the size distribution of the drops, thus identifying the value of these coefficients.

As a result of a discrete Fourier transform, the spectrum is represented by n lines, each corresponding to a certain Doppler frequency $f_i$.

The relation that links the diameter of a drop d to its terminal velocity v, and links said terminal velocity to the theoretical Doppler frequency (the one generated when the drop is distant from the instrument), is known. On the basis of this relationship, it is possible to determine the n diameters of a drop $d_i$ that correspond to the n frequencies $f_i$.

$$d_i = F(f_i)$$

Now assume one observes a precipitation of any kind, using x(n) to indicate the size vector n of its size distribution. Each element $x_i$, in other words, represents the average number of drops having the diameter $d_i$ that are present in the unit volume. Using y(n) to designate the vector that contains the amplitudes that correspond to the $f_i$ frequencies obtained from the discrete Fourier transform of the output signal of the Doppler radar, one can write:

$$Cx = y$$

where C is a square matrix having the dimension n. This notation represents the fact that each element $y_i$ of the detected spectrum vector ("spectral line") is composed with the contribution of all the n drop diameters being considered. The problem is to obtain x, which is the diametrical distribution, starting from y. To do this, it is known that it is sufficient to multiply the spectrum vector y by the inverse of the matrix C (if it exists), which is referenced as D:

$$x = Dy$$

Therefore: the solution to the problem lies in knowing the inverse matrix D. One of the core aspects of the present invention will be presented hereinafter, namely how the matrix C can be obtained and in which conditions it can be inverted.

It is noted that assuming an ideal system with zero spectral scattering (i.e., in which each drop diameter generates a single frequency), the problem is trivialized, since C has nonzero elements only on the main diagonal.

Suppose a monodisperse precipitation, composed of drops having a diameter $d_i$ and having a known intensity $q_i$, is made to fall onto the apparatus. Since both the terminal velocity and the volume of water depend on the diameter of the drop, it is straightforward to pass from the intensity $q_i$ (mm/h) to the number of drops per unit volume, $x_i$, and vice versa. If now one performs a Fourier analysis of the resulting signal, one finds a certain spectrum which is represented by a vector y.

$$Cx=y$$

Vector y, divided by the value $x_i$, actually represents the value of the i-th column of the matrix C. The vector x in fact has a single nonzero element, the one having the index i.

If this experiment is repeated for the various diameters, it is gradually possible to determine all the columns of C. Once the matrix C is known, it is possible to apply the known methods to invert it and obtain its inverse D. The matrix D is all that is necessary for the operation of the instrument. In said operation, the spectrum of the received signal is calculated by means of a DFT (Discrete Fourier Transform) and the diameter distribution is obtained by multiplying said spectrum by D.

The above suggests a method for determining the matrix D which consists in causing monodisperse precipitations of known intensity with various diameters to fall onto the apparatus, until the matrix C is filled completely, and then inverting it to obtain D.

Actually, it is not practical to really perform the described operations, especially due to the difficulty in accurately generating sufficient monodisperse precipitations with drops at terminal velocity. On the other hand, knowledge of the matrix D is indispensable for the operation of the instrument. Accordingly, the following method for determining D has been devised and is an integral part of the present invention.

It is possible to create a computer model of the instrument with adequate accuracy. This model is substantially based on determining the directivity diagrams of the antennas, for which there are accurate computational methods widely used in telecommunications technology. On the bases of these diagrams and of the constructive characteristics of the instrument (distance and inclination of the antennas, shape and distance of covering) it is easy to determine the sensitivity characteristic of the instrument, i.e., the path gain (or attenuation) related to each point of the space that is "visible" by the instrument. At this point it is possible to generate a simulated precipitation, for example a monodisperse rain of known intensity, which is made to interact with the simulated instrument, generating the output signal thereof as the vector sum of the contributions of all the drops on the basis of the backscattering coefficients of the individual drops. The discrete Fourier transform of this signal allows to obtain the elements to be inserted in the column of C that corresponds to the chosen diameter. By then varying the diameter of the drops and repeating the simulation, it is possible to gradually fill the entire matrix C until it is complete, and then invert it to obtain D.

Since this simulation is computationally rather demanding, it is possible to perform it for just one given diameter, subsequently transforming the results appropriately in order to obtain the results related to the other diameters. It is sufficient to perform a transformation which takes into account the different terminal velocity, the different volume of the drop and the different backscattering coefficient, all of which are functions of the diameter.

It should be noted that the described method allows to avoid one of the elements of difficulty mentioned initially, i.e., exact knowledge of the measurement volume. The measurement volume in fact appears implicitly in the described process, since the output signal is placed in direct relation to the intensity of the precipitation. This can be compared to the following example: a funnel rain gauge could be calibrated without knowing the catch area but by knowing instead the ratio between the amount of water collected in the unit time and the intensity of the precipitation.

It should be noted that since the matrix C depends exclusively on the characteristics of the apparatus, the inversion can be performed off-line once and for all. Accordingly, the apparatus according to the invention does not pose the burden of the calculation that would be required if said inversion had to be performed at each data acquisition, and also does not entail the possible unknown that, depending on the acquired data, the process may entail long times or even fail (for example because the matrix cannot be inverted or for reasons dependent on the type of algorithm or on numeric precision).

Once the inverse matrix D has been determined, it is permanently stored and constitutes the frequency-diameter transformation matrix, which is the center of the operation of the apparatus according to the invention. The operations to be performed at each measurement in order to determine the vector of the diameters x are spectral analysis of the signal (FFT, fast Fourier transform) in order to obtain the vector of the frequencies y, and the product of said vector by D.

If the scattering functions for the various diameters are relatively narrow bell-shaped curves, the quantitatively significant contributions will derive exclusively from the functions related to the neighboring diameters. Accordingly, in the matrix C only the values of the main diagonal and of the adjacent diagonals will be significantly different from zero.

The invertibility of this matrix is not guaranteed in advance. There is a criterion of sufficiency which ensures that the matrix can be inverted if, for each row, the element that belongs to the main diagonal is larger than the sum of all the others. This criterion has a direct physical correspondence, in that the elements of each column are simply the response of the instrument to a monodisperse precipitation. If this response is excessively broad with respect to the chosen discretization step, the matrix cannot be inverted and it is necessary to provide a coarser discretization, i.e., reduce the number of rows/columns of the matrix or reduce the scattering of the instrument by acting on its structure, as mentioned hereinafter.

It has been noted that the matrix C has dimensions equal to the number of spectral lines produced by DFT. It is evident that, by operating at the frequency of 10 GHz, the range of Doppler frequencies that can be generated ranges, for the larger drops, to 700 Hz. It is also evident that in order to have sufficient diameter resolution at the larger diameters it is convenient to have a frequency resolution of at least 1 Hz (the velocity versus diameter function gradually flattens toward the higher frequencies). Even assuming that the smaller drops are ignored and that one starts from 100 Hz instead of from zero, the matrix C would therefore be formed by 600 x 600 = 360,000 elements. Such a matrix, in addition to being very cumbersome, would have a very uncertain invertibility owing to the above noted situation. One in fact is seeking to obtain from an instrument a resolution which is higher than its natural resolution. Moreover, even assuming that inversion is possible, the inverse matrix D also would have a dimension of 600. For each measurement made, the vector obtained from DFT on the signal would have to be multiplied by this matrix, and this would entail 360,000 multiplications and additions.

In actual fact, one can observe that this resolution is useful only at the higher frequencies, in order to compensate for the flattening of the velocity/diameter curve. At the lower frequencies, a coarser resolution is sufficient. On the basis of these remarks, the following method has been devised and is part of the present invention.

In order to have a matrix C with reduced dimensions, the method consists in dividing the spectrum into frequency bands, grouping one or more spectral lines in each band. This division is performed in a nonlinear fashion, so as to obtain a resolution which is constant in terms of percentage on the diameters. The frequency/diameter characteristic is in fact highly nonlinear: while for drops of approximately one millimeter one has a resolution of approximately 250 Hz/mm, for the larger drops one obtains a resolution of 5 Hz/mm. In this manner, the dimension of the matrix no longer corresponds to the number of spectral lines but to the number of bands, thus achieving a significant reduction in its dimensions.

By way of example, the range of diameters from 0.8 to 7 mm (which corresponds to Doppler frequencies 220-650 Hz) was divided into 21 frequency bands, thus obtaining a 21x21 matrix which is easier to invert and is much lighter in terms of related real-time computational burden.

Another aspect that characterizes the present invention is the means used to improve the "natural" resolution of the instrument. The above description illustrates a method that has been found for increasing said resolution, based on data processing. It has been found that it is limited by the non-invertibility of the matrix C if one seeks to obtain a resolution which is excessively extreme with respect to the "natural" resolution of said instrument. Since one of the main purposes of the instrument is to measure the diametrical distribution of drops, resolution is a characteristic of primary importance.

The present invention comprises a method for achieving an increase in said natural resolution, appropriately delimiting the measurement volume considered by the apparatus according to the invention, i.e., the volume which is seen by the antennas 1 of the apparatus and in which the hydrometeors can be present. Generally, the more the region of space in which the apparatus is sensitive to hydrometeors is physically reduced to a volume in which the equiphase surfaces can be likened with good approximation to parallel planes, the more the spectral resolution of the instrument improves.

The first aspect to act on in order to achieve this result is the directivity diagram of the antennas and their distance and inclination, i.e., the design of the instrument, so as to reduce sensitivity in the lateral regions, in which the drops generate Doppler frequencies which are shifted significantly with respect to those generated at great distance and are associated with high echo amplitudes.

Therefore, according to the present invention, it is possible to act on the confinement of the measurement volume, according to the criterion of inhibiting the presence of falling drops in said regions or, as an alternative, of appropriately shielding said regions so that they are not visible to the instrument.

The first provided solution of the present invention consists in excluding from the measurement volume the region that lies closest to the antennas 1 by arranging a barrier ("roof") which is constituted by one or more flat walls meant to stop the drops at a certain height above the antennas but is transparent to microwaves and shaped so as to facilitate drainage of the hydrometeors. Said barrier is schematically shown in the figure and is designated by the reference numeral 8. Conveniently, the barrier 8 can be formed by means of one or more flat plates of PTFE, shaped and arranged at a certain distance from the apertures of the antennas 1.

In order to eliminate the effects of the more lateral regions without having to install an excessively large barrier as described, an additional improvement can be achieved by laterally blinding the instrument, for example by surrounding with walls of shielding material (material which absorbs or reflects at the operating frequency of the apparatus) the region around the antennas up to a suitable height which depends on the directional characteristic of said antennas.

The barrier can advantageously also be formed by means of a dome shaped like a portion of a spherical or, better still, ellipsoidal surface. If said ellipsoid is provided so that its foci coincide with the phase centers of the antennas, it coincides with an equiphase surface. The advantage is that the drops that percolate along said surface, by causing a nil Doppler shift, do not create contributions that alter the disdrometric spectrum.

In addition to percolation, one of the other factors that interferes in the correct operation of the instrument is the bouncing of the drops on the upper surface of the instrument (covering or barrier, if present). The drops produce echoes with spurious Doppler shifts which reduce the precision of the measurement. One method for reducing the extent of this phenomenon is to give the surface an appropriate surface roughness, so as to facilitate as much as possible the dissipation of energy on impact and the breakup of the drops.

The characterization of the instrument with the above described simulation method cannot be considered valid without experimental verification. Accordingly, it is indispensable to provide methods for:

-- checking the validity of the model used;
-- calibrating the instrument.

The practical validity of what has been described above would be reduced without a way to perform these operations. Hereinafter, these methods are described as an integral part of the present invention, since they allow to perform said operations simply, using natural precipitations.

The difficulty of producing artificial calibrated precipitations, particularly monodisperse ones, with sufficient precision has already been mentioned. Therefore, the simplest way to perform these operations is to use natural precipitations, using as reference instrument a conventional rain gauge, although this method evidently suffers drawbacks.

The first point to be checked is the validity of the model. This can be checked rather easily by performing one or both of the tests described hereinafter.

Test 1 (linearity check) is one of the original aspects of the present invention. It is based on the observation that any natural rain has a size distribution which is a function of intensity. In the case of a "normal" precipitation, this distribution is given by the Marshall and Palmer relationship, which indicates that the contribution of the larger-diameter drops increases as the intensity of the precipitation increases. Accordingly, it is an excellent tool for verifying the entire computational process.

1. Linearity check - The pluviometric indications at various precipitation intensities are compared. These must match to less than a calibration factor within the estimated precision. Accordingly, if the model is not correct and the matrix D does not contain the appropriate values, discrepancies will be found between the indications of the two instruments as a function of intensity. Small discrepancies can be accepted and optionally corrected, while large discrepancies suggest the need to review the model.

2. Checking a normal distribution - The disdrometric distribution indicated by the instrument is observed. For "normal"-type rains (therefore excluding tropical storms etcetera), this must match the trend predicted by Marshall and Palmer, both as regards the shape (a rectilinear trend must be obtained in a semilogarithmic chart) and as regards the position of said straight line with respect to the straight line related to the measured intensity, plotted according to Marshall and Palmer.

Procedure 1 also allows to calibrate the instrument, exactly determining the calibration factor, i.e., the multiplication coefficient that is required in order to make the indication of the instrument coincide with the reference instrument. During this step it is optionally possible to acquire correction factors in order to correct any slight nonlinearities in the pluviometric indication according to the intensity of precipitation.

It should be noted that differently from test 2, the validity of test 1, and therefore the precision of the calibration, is independent of actual compliance with the Marshall and Palmer distribution of the precipitations used.

Clearly, once validation of the model and calibration have been performed on a certain instrument, subsequently taken as reference, other instruments of the same model can be calibrated with sufficient precision by means of electrical methods and/or on dummy targets, i.e., checking that the response of each instrument is equal to that of the reference instrument.

It is also important to take into account background noise in processing the signal according to the invention, since the presence/absence of precipitations is evaluated with respect to said noise. Furthermore, it provides a contribution which can bias the measurement, particularly the pluviometric one, which is the result of integration of the disdrometric measurement. Clearly, the error is more conspicuous at low precipitation values. This noise is due partly to the apparatus and partly to the observed environment and therefore has a certain variability.

It is noted that in the analyzed frequency band the noise has a substantially flat trend. It is therefore possible to refer to parts of the spectrum which, by the very nature of hydrometeors, do not usually contain Doppler signals, and therefore can be taken as a reference for evaluating the noise level even in the presence of precipitation.

The fall velocity of the drops is scarcely affected by the temperature of the air. It is in any case possible to perform a compensation of the formula that links the fall velocity to the diameter by means of an appropriate measurement of air temperature.

If the equiphase surfaces were parallel planes, the horizontal component of wind would produce no effect. The same refinements mentioned above for increasing the natural resolution of the instrument help to increase its insensitivity to lateral wind.

The presence of a vertical wind can bias the measurement of an instrument of this type, since it alters the terminal velocity and therefore the diameter estimate. The advantage of the present invention (which is bistatic) with respect to other solutions (monostatic ones) is that the analysis volume is limited to a very small region (2-3 m) above the instrument, and that within this region sensitivity decreases rapidly as distance from the instrument increases. Since at ground level the vertical component of the wind, if any, is nil, if the instrument is placed at this level the evaluation error is very small.

In any case, it is possible to provide the instrument with lateral protections at the region of sensitivity (2-3 m above) in order to reduce the influence of wind if it is located in particular regions.

The concept that underlies the operation of the instrument is the identification of the existence or not of a precipitation and the recognition of the type of precipitation.

Detection of existence is based on the verification of the emergence of a certain spectrum of Doppler frequencies with respect to the background noise.

Recognition of the type of precipitation is based on the fact that every type of precipitation has a spectrum which assumes characteristic shapes. For example, for rain the spectrum reflects the distribution of diameters as a function of the intensity of the precipitation (according to Marshall and Palmer). Hail contains distinctly higher spectral components than rain, owing to the higher terminal velocity of the hydrometeors, while the opposite applies to snow.

Essentially, analysis of the shape of the spectrum and of its extension allows to automatically recognize which precipitation is involved. It is possible to identify in this way even "mixed" cases of rain mixed with hail or rain mixed with snow.

Depending on the type of precipitation detected, a different type of processing algorithm is chosen in order to evaluate its intensity and size distribution. For snow and hail, too, there are relationships which link the size of the hydrometeors (snowflakes and hailstones, respectively) to the terminal velocity and to the backscattering coefficients. Clearly, in these cases spectrum processing occurs with specific methods for snow or hail which are different from the methods discussed for rain but are based on the same described criteria.

In practice it has been observed that the apparatus according to the invention fully achieves the intended aim and objects, since it allows to obtain pluviometric and disdrometric measurements with adequate precision, substantially in real time, and most of all without requiring the presence of an operator.

In this manner it is possible, by means of an appropriate program which resides in the processor built into the apparatus or associated therewith, to recognize first of all whether a precipitation is in progress or not.

Moreover, on the basis of some very evident characteristics which differentiate the fall velocity of different types of hydrometeor, the apparatus is capable of providing an indication of the type of precipitation in progress (rain, snow, hail and mixed situations).

Moreover, by processing the signal with the described methods, the apparatus is capable of performing a disdrometric measurement, i.e., to provide a quantitative indication of the size distribution of the hydrometeors that compose the observed precipitation.

Moreover, by integrating the disdrometric data, the apparatus is capable of performing a pluviometric measurement, i.e., of providing a measurement of the amount of water (snow, hail) that has fallen.

The apparatus thus conceived is susceptible of numerous modifications and variations, all of which are within the scope of the appended claims; all the details may furthermore be replaced with other technically equivalent elements.

In practice, the materials used, so long as they are compatible with the specific use, as well as the dimensions, may be any according to requirements and to the state of the art.

The disclosures in Italian Patent Application No. MI99A001906 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A pluviometric disdrometric apparatus, comprising a pair of antennas connected to continuous wave generator means and to receiver means, amplifier means being connected to said receiver means and to data processing means, said antennas being arranged side by side and being aimed upwards and appropriately tilted if necessary, the intersection of directivity lobes of said antennas forming a measurement volume in which a given atmospheric precipitation is examined, characterized in that it comprises means for delimiting said measurement volume which are adapted to increase the resolution of said apparatus.

2. The apparatus according to claim 1, characterized in that said means for delimiting the measurement volume comprise one or more elements shaped like a flat plate which are arranged above said antennas and at a specific distance therefrom.

3. The apparatus according to claim 1, characterized in that said means for delimiting the measurement volume comprise a dome-shaped element arranged above said antennas and at a specific distance therefrom.

4. The apparatus according to claim 1, characterized in that said means for delimiting the measurement volume comprise means for laterally delimiting said measurement volume.

5. The apparatus according to claim 1, characterized in that in said means for delimiting the measurement volume the surface that is designed to make contact with said elements that constitute the precipitation is rough.

6. A method for determining pluviometric and disdrometric indications by means of an apparatus comprising a pair of antennas, comprising the step of emitting, from a first antenna of a pair of antennas, a continuous wave at a constant frequency and acquiring, by means of a second antenna of said pair of antennas, a signal reflected by the elements that constitute an atmospheric precipitation in progress, if any;
characterized in that it also comprises the steps of:

determining, by means of a frequency analysis of said reflected signal, the amplitudes of the components of the spectrum of said reflected signal;
determining, starting from said spectral components, by means of a frequency analysis of said reflected signal, the spectrum of said reflected signal, said spectrum being constituted by the overlap of a plurality of elementary spectra, in which each one of said elementary spectra is associated with a specific diameter of the elements that compose said atmospheric precipitation, multiplied by a coefficient which indicates the size distribution of said elements that constitute the precipitation.

7. The method according to claim 6, characterized in that it comprises a step of comparing the determined frequency spectrum with a previously stored reference noise level, in order to recognize the existence of a precipitation.

8. The method according to claim 7, characterized in that the reference noise level is evaluated and continuously updated by examining the spectrum of said reflected signal in a frequency band which is usually not affected by the Doppler shifts of the elements that compose said precipitation.

9. The method according to claim 6, characterized in that it comprises a step of comparing the frequency spectrum generated by a precipitation with a database in which characteristic profiles of precipitations are stored, in order to recognize the type of said precipitation.

10. The method according to claim 6, characterized in that it comprises, in a step for characterizing said apparatus which is performed offline and only once, a step of determining, by means of a computational method based on simulation, the elements of a square matrix and in then inverting said matrix, obtaining an inverse matrix, said inverse matrix being the means for extracting from the frequency spectrum vector of the signal the vector of the diametrical distribution of the elements that constitute said precipitation.

11. The method according to claim 10, characterized in that the step of determining the number of elements that constitute said precipitation for each diameter of said elements consists in performing a multiplication between a vector constituted by the values of said spectrum for each frequency of the spectrum and said inverted coefficient matrix.

12. The method according to claim 11, characterized in that said coefficient matrix is stored permanently.

13. The method according to claim 10, characterized in that the step of determining said coefficient matrix comprises the step of dividing the spectrum of said reflection signal into frequency bands in a nonlinear manner, in order to reduce the dimension of said coefficient matrix.

14. The method according to claim 13, characterized in that the spectrum of the diameters also is divided in a nonlinear manner into an equal number of bands.

15. The method according to claim 13, characterized in that a row and a column of the coefficient matrix correspond respectively to each frequency band and diameter band.

16. The method according to claim 11, characterized in that it comprises a step that consists in associating a band of terminal velocities of said elements that constitute the precipitation with each frequency band of the spectrum and a diameter band with said terminal velocity band.

17. The method according to claim 7, characterized in that the reference noise level is used to correct the disdrometric and pluviometric measurement.

18. The method according to claim 10, characterized in that it comprises a step of verifying the characterization of said apparatus, based on the use of natural precipitations of variable intensity and on comparison with conventional rain gauges.

19. The method according to claim 18, characterized in that said natural precipitations have any size distribution.